# EUROPEAN PATENT APPLICATION

(11) **EP 4 773 350 A1**
(43) Date of publication of application: **08.07.2026**
(21) Application number: 24874819.6
(22) Date of filing: 04.06.2024
(51) Int. Cl.: H01M 10/658, H01M 10/6551, H01M 50/30, H01M 50/502

(54) **BATTERY ASSEMBLY**

(30) Priority: 04.10.2023 KR 20230131537
(71) Applicant: SK On Co., Ltd., Seoul 03161 (KR)
(72) Inventor: KWAK, Seung Il, Daejeon 34124 (KR); LEE, Jung Kwan, Daejeon 34124 (KR); CHOI, Ha Neul, Daejeon 34124 (KR)
(74) Representative: Stolmár & Partner Patentanwälte PartG mbB
(86) International application number: PCT/KR2024/007647
(87) International publication number: WO 2025/075260

(57) **Abstract**

The battery assembly of the present disclosure comprises a case, a plurality of battery cells accommodated in an inner space of the case, a barrier member disposed between the plurality of battery cells, and a sealing member surrounding an upper end, a left end, and a right end of the barrier member, thereby improving thermal stability and delaying heat propagation to adjacent battery cells.

## Description

### [Technical Field]

The present disclosure relates to a secondary battery, and more specifically, to a battery assembly.

### [Background Art]

A secondary battery is a rechargeable battery capable of charging and discharging, and can be applied to various types of mobility devices such as portable electronic devices, automobiles, ships, aircraft, and drones. The secondary battery may be utilized as a battery assembly in which a plurality of battery cells are electrically connected in order to increase battery capacity or output. The battery assembly may be classified into a battery module or a battery pack, depending on the unit.

Since the battery assembly has a structure including a plurality of battery cells, there is a problem in that heat or gas of a specific battery cell is easily propagated to other adjacent battery cells. Accordingly, there is a demand for measures to improve the thermal stability of the battery assembly.

### [Disclosure]

### [Technical Problem]

The present disclosure provides a battery assembly with improved thermal stability.

The present disclosure can be widely applied in the field of green technologies such as solar power generation and wind power generation. In addition, the present disclosure can be applied to eco-friendly devices such as electric vehicles and hybrid vehicles for suppressing air pollution and greenhouse gas emissions to prevent climate change.

### [Technical Solution]

In one embodiment, the battery assembly may comprise a case, a plurality of battery cells accommodated in an inner space of the case, a barrier member disposed between the plurality of battery cells, and a sealing member surrounding an upper end, a left end, and a right end of the barrier member.

In one embodiment, the sealing member may comprise a groove portion into which an end of the barrier member is inserted, and a support portion connected to an upper end, a left end, and a right end of the groove portion.

In one embodiment, at least one protrusion protruding toward the barrier member may be formed on an inner surface of the groove portion facing the barrier member.

In one embodiment, the groove portion may comprise a reinforcement member and an elastic member surrounding an outer surface of the reinforcement member.

In one embodiment, the reinforcement member may comprise a base frame extending in parallel with one of an upper end, a left end, and a right end of the barrier member, a front frame extending from the base frame in parallel with a front end of the barrier member, and a rear frame extending from the base frame in parallel with a rear end of the barrier member.

In one embodiment, the support portion may comprise an elastic member in which a cavity is formed.

In one embodiment, the case may comprise a lower case facing lower ends of the plurality of battery cells and a lower end of the sealing member, and an upper case facing upper ends of the plurality of battery cells and an upper end of the sealing member, and an upper end of the support portion may be pressed by the upper case.

In one embodiment, the battery assembly may further comprise a heat dissipation member applied between a lower end of the barrier member and an upper end of the lower case.

In one embodiment, the upper case may comprise a receiving groove into which an upper end of the support portion is inserted, and a receiving protrusion protruding downward from a surrounding region of the receiving groove.

In one embodiment, the upper case may have a plurality of upper vents formed corresponding to respective ones of a plurality of regions partitioned by the sealing member and the barrier member, and gas generated from a battery cell disposed in one of the plurality of regions may be discharged through the upper vent corresponding to the one region among the plurality of upper vents.

In one embodiment, the battery assembly may further comprise a busbar assembly electrically connecting the plurality of battery cells and respectively facing left and right ends of the plurality of battery cells and the sealing member, and one of a left end and a right end of the support portion may be pressed by the busbar assembly.

In one embodiment, the busbar assembly may comprise a busbar frame including a receiving groove into which a side surface of the support portion is inserted, and a receiving protrusion protruding in a lateral direction from a surrounding region of the receiving groove, and a busbar coupled to an outer surface of the busbar frame and electrically connected to cell tabs of the plurality of battery cells.

In one embodiment, the busbar assembly may have a plurality of side vents formed corresponding to respective ones of a plurality of regions partitioned by the sealing member and the barrier member, and gas generated from a battery cell disposed in one of the plurality of regions may be discharged through the side vent corresponding to the one region among the plurality of side vents.

In one embodiment, the battery assembly may further comprise a sealing member disposed between an end of the barrier member and the groove portion of the sealant.

In one embodiment, the sealant may comprise at least one of urethane, silicone, and epoxy.

### [Advantageous Effects]

The present disclosure can provide a battery assembly with improved thermal stability.

The present disclosure can delay heat propagation from a specific battery cell to an adjacent battery cell.

The present disclosure can effectively control a discharge path of gas or dust inside the battery assembly.

The present disclosure can reduce manufacturing cost and simplify a manufacturing process by applying an integrated sealing member.

### [Description of Drawings]

FIG. 1 is a view for explaining a battery assembly according to one embodiment.
FIG. 2 is a view for explaining an interior of the battery assembly according to one embodiment.
FIG. 3 is a view for explaining a side end of a barrier member according to one embodiment.
FIG. 4 is a view for explaining a side end of a barrier member according to another embodiment.
FIG. 5 is a view for explaining a sealing member according to one embodiment.
FIG. 6 is a view for explaining the sealing member pressed according to one embodiment.
FIG. 7 is a view for explaining a cross-section of the battery assembly according to one embodiment.
FIG. 8 is a view for explaining heat propagation inside the battery assembly according to one embodiment.
FIG. 9 is a view for explaining another cross-section of the battery assembly according to one embodiment.

### [Modes of the Invention]

The structural or functional descriptions of embodiments disclosed in the present specification or application are merely illustrated for the purpose of explaining embodiments according to the technical spirit of the present invention, and embodiments according to the technical spirit of the present invention may be implemented in various forms in addition to the embodiments disclosed in the present specification or application, and the technical spirit of the present invention shall not be construed as being limited to the embodiments described in the present specification or application.

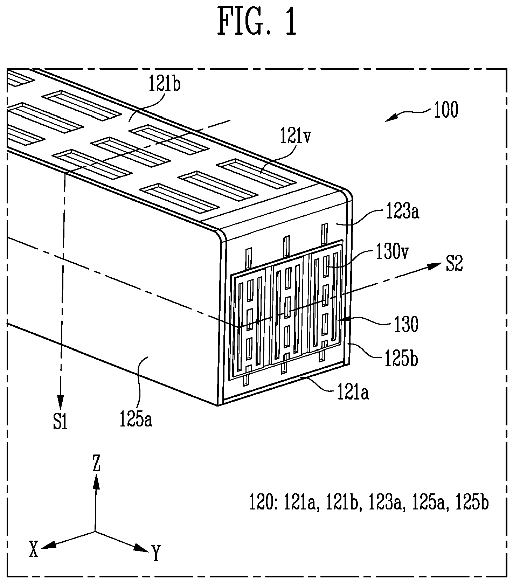

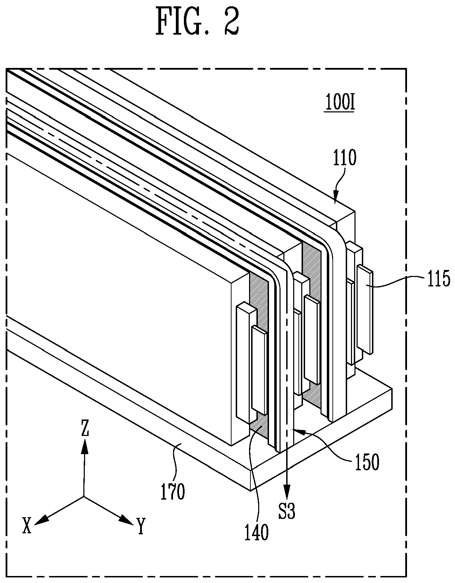

FIG. 1 is a view for explaining a battery assembly according to one embodiment. FIG. 2 is a view for explaining an interior of the battery assembly according to one embodiment. FIG. 2 shows an inner space 100I of a case 120 of the battery assembly 100 of FIG. 1.

Referring to FIGS. 1 and 2, a battery assembly 100 according to one embodiment may comprise a plurality of battery cells 110, a case 120, a barrier member 140, and a sealing member 150. The battery assembly 100 according to one embodiment may be a battery module or a battery pack.

Referring to FIG. 2, the plurality of battery cells 110 may be stacked and disposed along one direction. For example, the one direction may be an X-axis direction. The battery cell 110 may be a secondary battery capable of repeatedly performing charging and discharging. For example, the battery cell 110 may be various types of secondary batteries such as a lithium ion battery, a vanadium ion battery, an all-solid-state battery, a metal-air battery, a sodium ion battery, or an aluminum ion battery.

The battery cell 110 may comprise an electrode assembly, an exterior material, and a cell tab 115. In one embodiment, the electrode assembly may comprise an electrolyte, a positive electrode, and a negative electrode. In one embodiment, the electrode assembly may further comprise a separator that blocks contact between the positive electrode and the negative electrode. The exterior material may accommodate the electrode assembly. For example, the exterior material may be implemented in various types such as a pouch type, a prismatic type, or a cylindrical type. A part of the cell tab 115 may be accommodated in the interior of the exterior material, and another part of the cell tab 115 may protrude outward from the exterior material. The cell tab 115 may comprise a positive electrode tab electrically connected to the positive electrode and a negative electrode tab electrically connected to the negative electrode. In one embodiment, the positive electrode tab may protrude in a +Y-axis direction, and the negative electrode tab may protrude in a -Y-axis direction. However, this is only one embodiment, and the positive electrode tab and the negative electrode tab may protrude in various directions.

Referring to FIGS. 1 and 2, the case 120 may form an inner space 100I. The plurality of battery cells 110, the barrier member 140, and the sealing member 150 may be accommodated in the inner space 100I of the case 120.

In one embodiment, the case 120 may comprise a lower case 121a, an upper case 121b, a left end case (not shown), a right end case 123a, a front end case 125a, and a rear end case 125b that are coupled to each other. In one embodiment, the lower case 121a to the rear end case 125b may be manufactured as separate members and coupled to each other by welding, bolts, or the like. In one embodiment, two or more of the lower case 121a to the rear end case 125b may be manufactured as an integrated member by die casting or the like.

In one embodiment, the lower case 121a may face lower ends of the plurality of battery cells 110, and the upper case 121b may face upper ends of the plurality of battery cells 110. For example, the lower end may be an end in a -Z-axis direction, and the upper end may be an end in a +Z-axis direction. The left end case may face left ends of the plurality of battery cells 110, and the right end case 123a may face right ends of the plurality of battery cells 110. For example, the left end may be an end in a -Y-axis direction, and the right end may be an end in a +Y-axis direction. The front end case 125a may face front ends of the plurality of battery cells 110, and the rear end case 125b may face rear ends of the plurality of battery cells 110. For example, the rear end may be an end in a -X-axis direction, and the front end may be an end in a +X-axis direction. Meanwhile, the X-axis, the Y-axis, and the Z-axis may be perpendicular to each other.

The barrier member 140 may be disposed between the plurality of battery cells 110. For example, one barrier member 140 may be disposed for each battery cell 110. As another example, one barrier member 140 may be disposed for every two battery cells 110. However, this is only one embodiment, and an arrangement pattern of the barrier member 140 may be variously modified.

In one embodiment, the barrier member 140 may comprise a heat insulating member. For example, the heat insulating member may comprise at least one of various materials such as mica and aerogel.

The sealing member 150 may surround at least three ends of the barrier member 140. In one embodiment, the sealing member 150 may surround an upper end and both side ends of the barrier member 140. For example, the both side ends may include a left end and a right end. In another embodiment, the sealing member 150 may surround an upper end, a lower end, and both side ends of the barrier member 140.

The sealing member 150 and the barrier member 140 may partition the inner space 100I into a plurality of regions. At least one battery cell may be disposed in each of the plurality of regions. In this case, the sealing member 150 coupled to the barrier member 140 may prevent gas, dust, or heat generated in one region from being propagated to another region. That is, the sealing member 150 of the present disclosure may enhance a sealing force between the barrier member 140 and the case 120, thereby suppressing transfer of material or heat between adjacent regions.

In one embodiment, the sealing member 150 may comprise an elastic member. For example, the elastic member may comprise at least one of various materials such as ACM (Acrylic Rubber), VMQ (Vinyl Methyl Rubber), NBR (Nitrile Butadiene Rubber), CR (Chloroprene Rubber), and EPDM (Ethylene Propylene Terpolymers).
In one embodiment, the battery assembly 100 may further comprise a busbar assembly 130.

In one embodiment, the busbar assembly 130 may electrically connect the plurality of battery cells 110 to each other.

In one embodiment, the busbar assembly 130 may face the cell tabs 115 of the plurality of battery cells 110, respectively. For example, when the cell tabs 115 are formed to protrude from left and right ends of the battery cells 110, the busbar assembly 130 may be disposed at each of the left and right ends of the battery cells 110. Further, the busbar assembly 130 may be electrically connected to the cell tabs 115. In one embodiment, the busbar assembly 130 may be coupled to the left end case and the right end case 123a, respectively.

In one embodiment, the battery assembly 100 may further comprise a heat dissipation member 170. The heat dissipation member 170 may be applied between a lower end of the barrier member 140 and an upper end of the lower case 121a. The heat dissipation member 170 may comprise a material having thermal conductivity and a material having adhesiveness. In one embodiment, the heat dissipation member 170 may further be applied between a lower end of the battery cell 110 and the upper end of the lower case 121a.

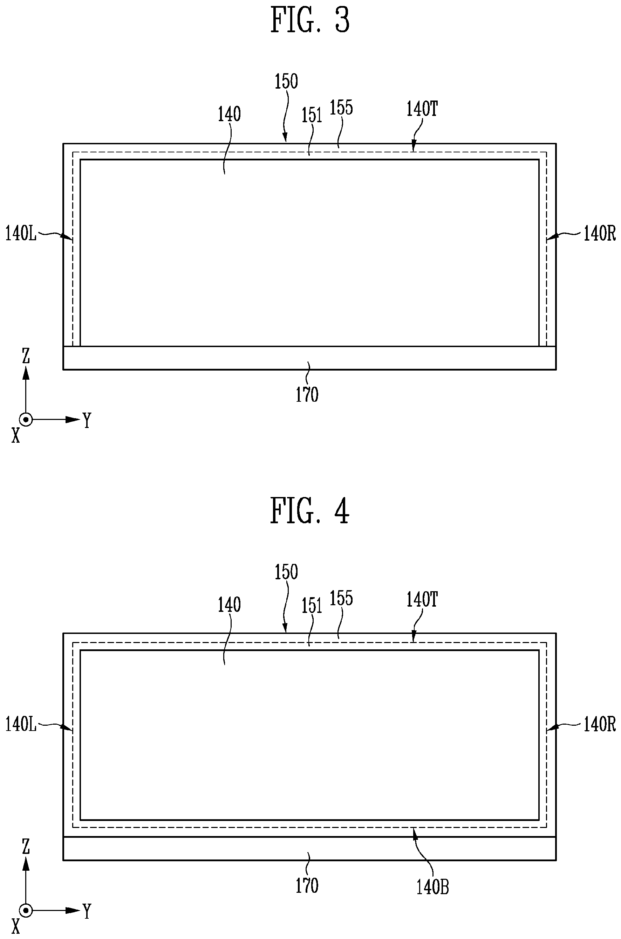

FIG. 3 is a view for explaining a side end of a barrier member according to one embodiment. FIG. 4 is a view for explaining a side end of a barrier member according to another embodiment. FIGS. 3 and 4 are cross-sectional views taken along S3 of FIG. 2.

Referring to FIGS. 3 and 4, the sealing member 150 may comprise a groove portion 151 and a support portion 155. An end of the barrier member 140 may be inserted into the groove portion 151. That is, the sealing member 150 may be coupled to the barrier member 140 through the groove portion 151. The end of the barrier member 140 may be classified into an upper end 140T, a lower end 140B, a left end 140L, and a right end 140R according to direction. The support portion 155 may be connected to an upper end, a left end, and a right end of the groove portion 151. In one embodiment, referring to FIG. 4, the support portion 155 may be connected to an upper end, a lower end, a left end, and a right end of the groove portion 151. The support portion 155 may be in close contact with the upper case 121b or the busbar assembly 130 to improve sealing force of the barrier member 140.

Referring to FIG. 3, the sealing member 150 according to one embodiment may surround three ends of the barrier member 140. The three ends may include the upper end 140T, the left end 140L, and the right end 140R. In this case, the heat dissipation member 170 may be applied between the lower end of the barrier member 140 and the upper end of the lower case 121a.

Referring to FIG. 4, the sealing member 150 according to one embodiment may surround four ends of the barrier member 140. The four ends may include the upper end 140T, the lower end 140B, the left end 140L, and the right end 140R of the barrier member 140. In this case, the heat dissipation member 170 may be applied between the lower end 140B of the barrier member 140 and the upper end of the lower case 121a. Specifically, the heat dissipation member 170 may be applied between the lower end of the sealing member 150 and the upper end of the lower case 121a.

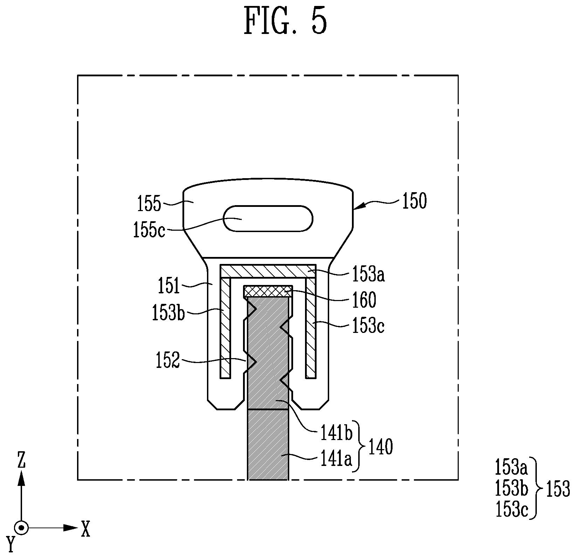

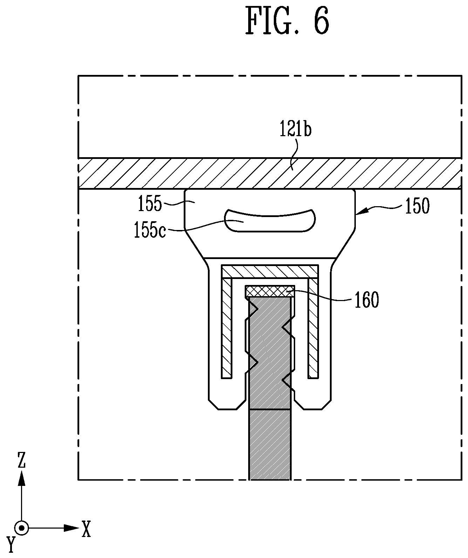

FIG. 5 is a view for explaining a sealing member according to one embodiment. FIG. 6 is a view for explaining the sealing member pressed according to one embodiment.

Referring to FIGS. 5 and 6, the sealing member 150 according to one embodiment may comprise a groove portion 151 and a support portion 155. Meanwhile, FIGS. 5 and 6 show a cross-section of an XZ plane for the sealing member 150 coupled to an upper end 140T of the barrier member 140 of FIGS. 3 and 4. This may be equally applied to a cross-section of an XY plane for the sealing member 150 coupled to the left end 140L and the right end 140R.

The barrier member 140 may comprise a body portion 141a and an end portion 141b connected to each other. The end portion 141b of the barrier member 140 may be inserted into the groove portion 151 of the sealing member 150. An inner surface of the groove portion 151 may face an outer surface of the end portion 141b. Here, the outer surface may be an upper end, a front end, or a rear end. As a specific example, the groove portion 151 of the sealing member 150 may comprise a receiving portion facing the upper end of the end portion 141b, and a protrusion extending from a front end (or a rear end) of the receiving portion to face the front end (or the rear end) of the end portion 141b.

In one embodiment, at least one protrusion 152 may be formed at an inner surface of the groove portion 151 of the sealing member 150. The protrusion 152 may protrude toward the barrier member 140. For example, the protrusion may be formed at the protrusion of the groove portion 151. The protrusion 152 may contact a front end or a rear end of the barrier member 140. Through a contact surface, the protrusion 152 may apply high pressure to the barrier member 140, thereby fixing the sealing member 150 to the barrier member 140 and enhancing sealing force of the sealing member 150 to prevent movement of flame, gas, or dust.

In one embodiment, a first protrusion of the groove portion 151 may face the front end of the barrier member 140, and a second protrusion of the groove portion 151 may face the rear end of the barrier member 140. At least one protrusion formed at the first protrusion may contact the front end of the barrier member 140, and at least one protrusion formed at the second protrusion may contact the rear end of the barrier member 140. In one embodiment, the protrusion of the first protrusion and the protrusion of the second protrusion may be arranged to be at different positions in one axial direction. For example, as shown in FIG. 5, one protrusion of the first protrusion may be arranged at a different position in a Z-axis direction from one protrusion of the second protrusion. In another embodiment, the protrusion of the first protrusion and the protrusion of the second protrusion may be arranged to be at the same position in one axial direction.

In one embodiment, the groove portion 151 may comprise a reinforcement member 153 and an elastic member. The elastic member may surround an outer surface of the reinforcement member 153.

In one embodiment, the reinforcement member 153 may comprise a material having high rigidity to improve fixing force of the groove portion 151. For example, the reinforcement member 153 may comprise a metal material such as iron or aluminum.

In one embodiment, the reinforcement member 153 may comprise a base frame 153a, a rear frame 153b, and a front frame 153c. In one embodiment, the base frame 153a, the rear frame 153b, and the front frame 153c may be manufactured as an integrated member.

The base frame 153a may extend in parallel with one of an upper end, a left end, and a right end of the barrier member 140. For example, referring to FIG. 5, the base frame 153a may extend in parallel with an upper end of the end portion 141b of the barrier member 140. The rear frame 153b may extend from the base frame 153a in parallel with a rear end of the barrier member 140. The front frame 153c may extend from the base frame 153a in parallel with a front end of the barrier member 140.

In one embodiment, referring to FIG. 6, an upper case 121b may be disposed at an upper end of the support portion 155. The upper end of the support portion 155 may be pressed by the upper case 121b. In this case, the upper end of the support portion 155 may be in close contact with a lower end of the upper case 121b.

In one embodiment, the support portion 155 may comprise an elastic member in which a cavity 155c is formed. The cavity 155c may facilitate elastic deformation of the elastic member caused by pressing of the upper case 121b. In this case, a size of the cavity 155c after pressing may be smaller than that before pressing of the upper case 121b.

In one embodiment, the elastic member of the groove portion 151 or the support portion 155 may comprise at least one of various materials such as ACM (Acrylic Rubber), VMQ (Vinyl Methyl Rubber), NBR (Nitrile Butadiene Rubber), CR (Chloroprene Rubber), and EPDM (Ethylene Propylene Terpolymers).

In one embodiment, the battery assembly may further comprise a sealant 160. The sealant 160 may be disposed between the sealing member 150 and the barrier member 140. As a specific example, the sealant 160 may be disposed between the groove portion 151 of the sealing member 150 and the end portion 141b of the barrier member 140. In one embodiment, the sealant 160 may be applied at a position of an inner surface of the groove portion 151 where an upper end of the end portion 141b is received.

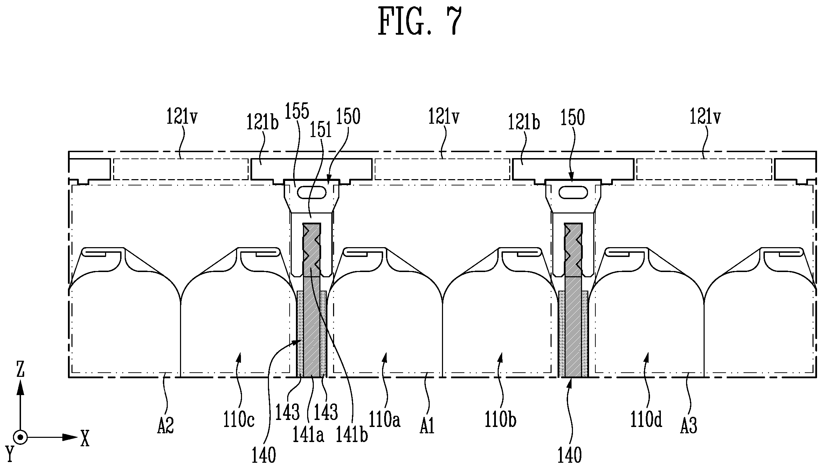

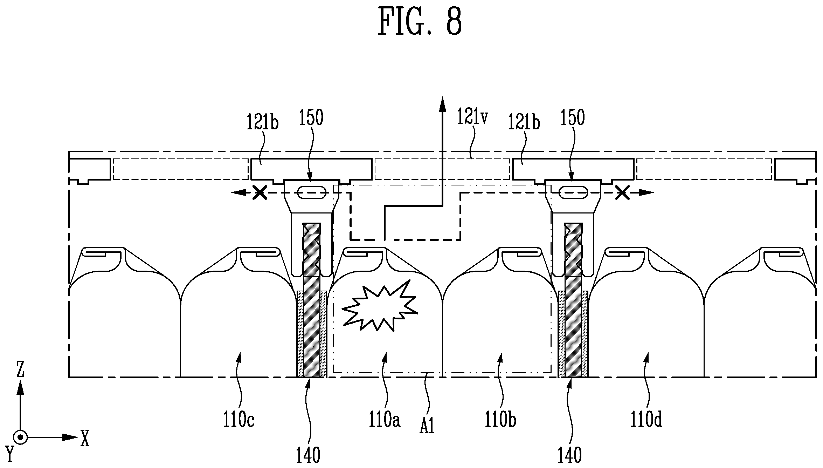

In one embodiment, the sealant 160 may comprise at least one material of urethane, silicone, and epoxy. However, this is only one embodiment, and the sealant 160 may comprise various sealant materials.FIG. 7 is a view for explaining a cross-section of the battery assembly according to one embodiment. FIG. 8 is a view for explaining heat propagation inside the battery assembly according to one embodiment. FIGS. 7 and 8 show a part of a cross-section of an XZ plane taken along S1 of FIG. 1.

Referring to FIGS. 7 and 8, a barrier member 140 may be disposed between the plurality of stacked battery cells 110a to 110d. The sealing member 150 may surround an upper end of the barrier member 140.

In one embodiment, the barrier member 140 may comprise a body portion 141a, an end portion 141b, and a compression pad 143. The end portion 141b may be connected to an upper end of the body portion 141a. The end portion 141b may be inserted into the groove portion 151 of the sealing member 150. The compression pad 143 may be disposed at a front end and a rear end of the body portion 141a. The compression pad 143 may apply surface pressure to the battery cells 110a and 110c in contact with the compression pad 143 to prevent a swelling phenomenon of the battery cells 110a and 110c.

In one embodiment, the upper case 121b may face upper ends of the plurality of battery cells 110a to 110d and the sealing member 150. The upper case 121b may press an upper end of the support portion 155 of the sealing member 150.

In one embodiment, the upper case 121b may comprise a receiving groove and a receiving protrusion. The receiving groove may be a portion of the upper case 121b into which an upper end of the support portion of the sealing member 150 is inserted. The receiving protrusion may be a portion of the upper case 121b protruding downward as a surrounding region of the receiving groove. The receiving protrusion may prevent the upper end of the support portion 155 seated in the receiving groove from being separated.

In one embodiment, the barrier member 140 and the sealing member 150 may partition an inner region of the case 120 into a plurality of regions A1 to A3. At least one of the battery cells 110a to 110d may be disposed in each of the plurality of regions A1 to A3.

Referring to FIGS. 1 and 7, a plurality of upper vents 121v may be formed in the upper case 121b. In one embodiment, at least one upper vent 121v corresponding to each of the regions A1 to A3 may be formed in the upper case 121b. That is, at least one upper vent 121v may be formed for each of the regions A1 to A3. The upper vent 121v may function as a passage for discharging gas, dust, or heat generated from the battery cells 110a to 110d disposed in the corresponding regions A1 to A3.

In one embodiment, referring to FIGS. 7 and 8, gas, dust, or heat (hereinafter, referred to as gas, etc.) may be generated in a first battery cell 110a disposed in a first region A1 among the plurality of regions A1 to A3. In this case, the gas, etc. generated in the first battery cell 110a in the first region A1 may be discharged through the upper vent 121v corresponding to the first region A1 among the plurality of upper vents. At this time, the sealing member 150 may seal a space between the upper case 121b and the barrier member 140, thereby suppressing the gas, etc. in the first region A1 from moving to other regions A2 and A3.

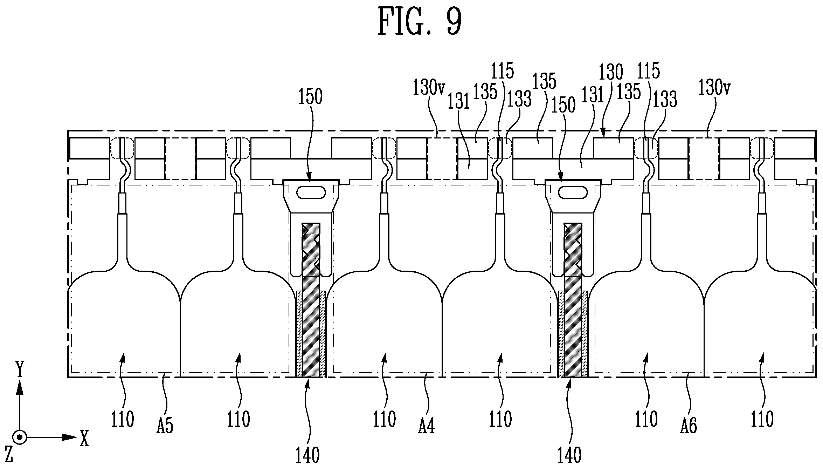

FIG. 9 is a view for explaining another cross-section of the battery assembly according to one embodiment. FIG. 9 shows a part of a cross-section of an XY plane taken along S2 of FIG. 1.

Referring to FIGS. 1 and 9, the battery assembly 100 may further comprise a busbar assembly 130. As shown in FIG. 9, the busbar assembly 130 may face a right end of the plurality of battery cells 110 and the sealing member 150. A right end of the support portion of the sealing member 150 may be pressed by the busbar assembly 130. Similarly, the busbar assembly 130 may face a left end of the plurality of battery cells 110 and the sealing member 150. In this case, a left end of the support portion of the sealing member 150 may be pressed by the busbar assembly 130.

In one embodiment, the busbar assembly 130 may comprise a busbar frame 131 and a busbar 135. The busbar frame 131 may comprise an insulating material such as plastic of MPPO (Modified Polyphenylene Oxide) or PP (Polypropylene) series, for example.

The busbar 135 may be coupled to an outer surface of the busbar frame 131. For example, the outer surface may be a right end or a left end. The busbar 135 may be electrically connected to the cell tab 115 of the battery cell 110. For example, the busbar 135 may comprise a conductive material such as copper or aluminum.

In one embodiment, the busbar assembly 130 may comprise a welded portion 133. The welded portion 133 may electrically connect the busbar 135 and the cell tab 115 to each other. As a specific example, a through-hole may be formed in the busbar assembly 130. The cell tab 115 of the battery cell 110 may be inserted into the through-hole. The welded portion 133 may be formed by welding the busbar 135 or the cell tab 115 in a state where the cell tab 115 is inserted into the through-hole.

In one embodiment, the busbar frame 131 may comprise a receiving groove and a receiving protrusion. The receiving groove may be a portion into which an outer surface of the support portion of the sealing member 150 is inserted. For example, the outer surface may be a right end or a left end. The receiving protrusion may protrude in a lateral direction from a surrounding region of the receiving groove.

In one embodiment, referring to FIGS. 1 and 9, the busbar assembly 130 may have a plurality of side vents 130v formed therein. The side vents 130v may correspond to one of a plurality of regions A4 to A6. The plurality of regions A4 to A6 may be partitioned by the sealing member 150. That is, at least one side vent 130v may be formed for each of the regions A4 to A6.

In one embodiment, gas generated from a battery cell 110 disposed in one of the plurality of regions A4 to A6 may be discharged through the side vent corresponding to the one region among the plurality of side vents 130v. In this case, the side vent 130v may function as a passage for discharging gas generated from the battery cell 110 disposed in the corresponding region A4 to A6. At this time, the sealing member 150 may seal a space between the busbar assembly 130 and the barrier member 140, thereby suppressing gas from moving from a specific region to another region.

## Claims

1. A battery assembly comprising:
a case;
a plurality of battery cells accommodated in an inner space of the case;
a barrier member disposed between the plurality of battery cells; and
a sealing member surrounding an upper end, a left end, and a right end of the barrier member.

2. The battery assembly according to claim 1, wherein the sealing member comprises:
a groove portion into which an end of the barrier member is inserted; and
a support portion connected to an upper end, a left end, and a right end of the groove portion.

3. The battery assembly according to claim 2, wherein at least one protrusion protruding toward the barrier member is formed on an inner surface of the groove portion facing the barrier member.

4. The battery assembly according to claim 2, wherein the groove portion comprises a reinforcement member and an elastic member surrounding an outer surface of the reinforcement member.

5. The battery assembly according to claim 4, wherein the reinforcement member comprises:
a base frame extending in parallel with one of an upper end, a left end, and a right end of the barrier member;
a front frame extending from the base frame in parallel with a front end of the barrier member; and
a rear frame extending from the base frame in parallel with a rear end of the barrier member.

6. The battery assembly according to claim 2, wherein the support portion comprises an elastic member in which a cavity is formed.

7. The battery assembly according to claim 2, wherein the case comprises:
a lower case facing lower ends of the plurality of battery cells and a lower end of the sealing member, and
an upper case facing upper ends of the plurality of battery cells and an upper end of the sealing member,
and wherein an upper end of the support portion is pressed by the upper case.

8. The battery assembly according to claim 7, further comprising a heat dissipation member applied between a lower end of the barrier member and an upper end of the lower case.

9. The battery assembly according to claim 7, wherein the upper case comprises a receiving groove into which an upper end of the support portion is inserted, and a receiving protrusion protruding downward from a surrounding region of the receiving groove.

10. The battery assembly according to claim 7, wherein the upper case has a plurality of upper vents formed corresponding to respective ones of a plurality of regions partitioned by the sealing member and the barrier member, and
wherein gas generated from a battery cell disposed in one of the plurality of regions is discharged through the upper vent corresponding to the one region among the plurality of upper vents.

11. The battery assembly according to claim 2, further comprising a busbar assembly electrically connecting the plurality of battery cells and respectively facing left and right ends of the plurality of battery cells and the sealing member,
wherein one of a left end and a right end of the support portion is pressed by the busbar assembly.

12. The battery assembly according to claim 11, wherein the busbar assembly comprises:
a busbar frame comprising a receiving groove into which a side surface of the support portion is inserted, and a receiving protrusion protruding in a lateral direction from a surrounding region of the receiving groove; and
a busbar coupled to an outer surface of the busbar frame and electrically connected to cell tabs of the plurality of battery cells.

13. The battery assembly according to claim 11, wherein the busbar assembly has a plurality of side vents formed corresponding to respective ones of a plurality of regions partitioned by the sealing member and the barrier member, and
wherein gas generated from a battery cell disposed in one of the plurality of regions is discharged through the side vent corresponding to the one region among the plurality of side vents.

14. The battery assembly according to claim 2, further comprising a sealant disposed between an end of the barrier member and the groove portion of the sealing member.

15. The battery assembly according to claim 14, wherein the sealant comprises at least one of urethane, silicone, and epoxy.
